# EUROPEAN PATENT APPLICATION

(11) **EP 3 613 538 A1**
(43) Date of publication of application: **26.02.2020**
(21) Application number: 19193133.6
(22) Date of filing: 22.08.2019
(51) Int. Cl.: B23Q 11/12, B23Q 11/14

(54) **MACHINING DEVICE**

(30) Priority: 23.08.2018 JP 2018156265
(71) Applicant: DGSHAPE Corporation, Hamamatsu-shi, Shizuoka 431-2103 (JP)
(72) Inventor: OHARA, Hisashi, Hamamatsu-shi,, Shizuoka 4312103 (JP)
(74) Representative: Grünecker Patent- und Rechtsanwälte PartG mbB

(57) **Abstract**

To provide machining devices in which the motor can be efficiently cooled. A machining device including a motor to which a tip tool can be attached and from which the tip tool can be removed, the tip tool machining a workpiece, the motor having a first housing, and a channel for coolant used to cool the tip tool, wherein the channel is arranged on at least a part of the first housing.

## Description

### Technical field

The present invention relates to machining devices.

### Background art

Machining devices equipped with a motor with an output shaft which machine workpieces by rotation-driving a tool at the tip by the output shaft have been known (JP-A-2018-30192).

In the machining devices as described above, the heat generated by the motor could cause burnout of parts or shorten the product life of the motor. Therefore, it was necessary to cool the motor efficiently.

In consideration of the above-mentioned circumstances, an object of the present invention is to provide machining devices in which the motor can be efficiently cooled.

### Summary of the invention

In order to achieve the above-mentioned object, the present invention provides a machining device including a motor to which a tip tool can be attached and from which the tip tool can be removed, the tip tool machining a workpiece, the motor having a first housing, and a channel for coolant used to cool the tip tool, wherein the channel is arranged on at least a part of the first housing.

According to the present invention, it is possible to provide machining devices in which the motor can be efficiently cooled.

### Brief description of the drawings

Fig. 1 is an external perspective view showing a machining device according to an embodiment;
Fig. 2 is a perspective view showing an internal structure of the machining device according to the embodiment;
Fig. 3 is a cross-sectional view of the machining device according to the embodiment;
Fig. 4 is a diagram of an attachment unit according to the embodiment with a workpiece mounted thereto;
Fig. 5A is a side view and of a motor and a jacket according to the embodiment
Fig. 5B is a vertical cross-sectional view the motor and the jacket according to the embodiment; and
Fig. 6A is a perspective view of the motor and the jacket according to the embodiment
Fig. 6B is a perspective view of the motor with the jacket being removed, according to the embodiment.

### Detailed description of the invention

### <Embodiment>

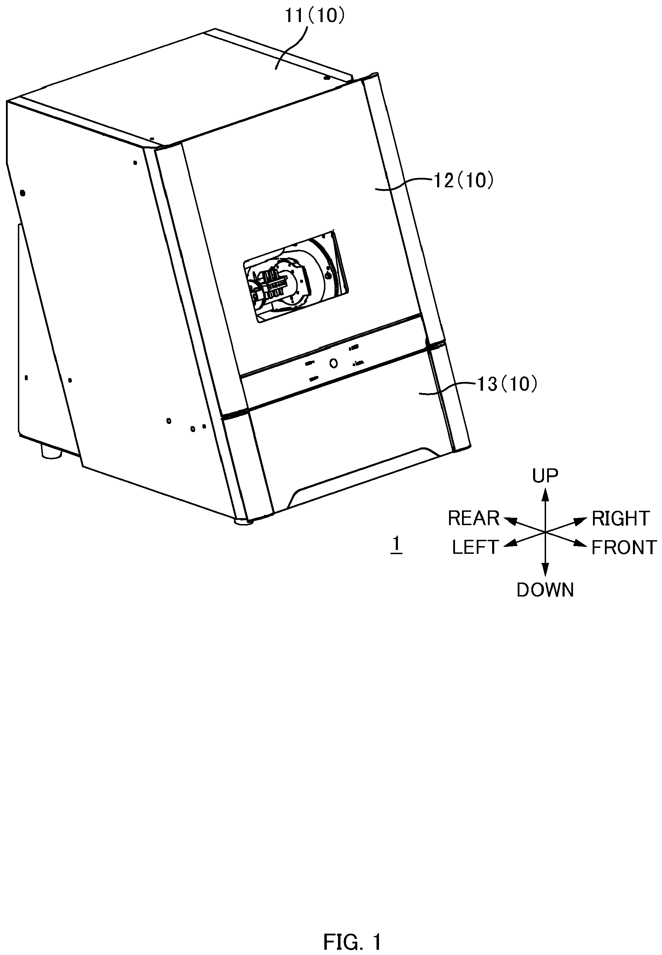

Referring to Figs. 1 to 6, a machining device 1 according to an embodiment of the present invention is described. As shown in Figs. 1 to 3, the machining device 1 according to this embodiment includes a housing 10, a machining unit 20, a movement mechanism 30, a holding unit 40, a tank 50, a feed unit 60, and a filter 70. The machining device 1 is for three-dimensionally cutting a workpiece C. The tank 50 can be attached to and removed from the housing 10. The filter 70 can be attached to and removed from the tank 50.

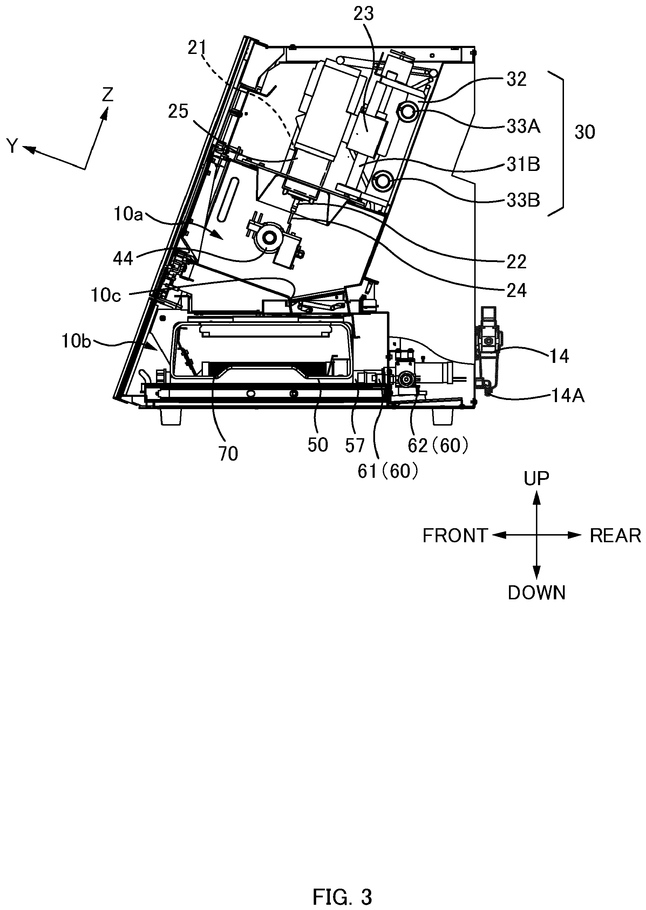

In this embodiment, as shown in Figs. 1 to 3, front, back, left, right, up, and down directions are defined. In Fig. 3, the side on which the tank 50 is mounted to the feed unit 60 is defined as the forward and the opposite direction is defined as the backward. As shown in Fig. 1, the left and right directions are defined based on the orientation of the housing 10 when seen from the front. The direction in which the machining unit 20 is arranged relative to the holding unit 40 is defined as upward and the opposite is defined as downward. For the members that can be attached and removed, such as the tank 50, the directions are defined based on their states of being mounted onto or in the housing 10.

### [Housing]

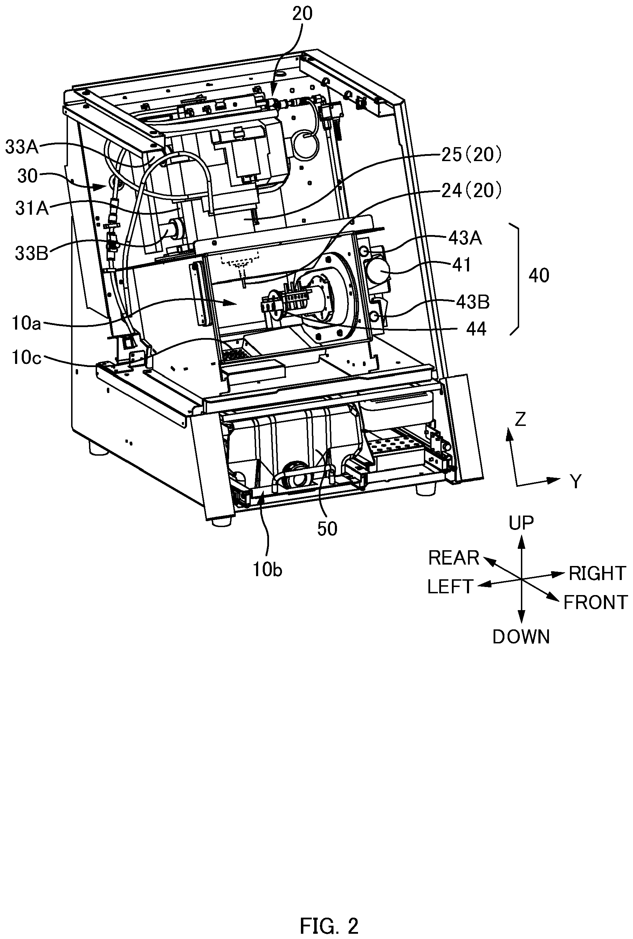

As shown in Fig. 1, the housing 10 includes a main body unit 11 formed to have a generally rectangular shape, a front cover 12 that can be moved up and down relative to the main body unit 11, a bottom cover 13, and a regulator 14. Inside the main body unit 11, the boundary of a machining space 10a is determined. Furthermore, in the main body unit 11, the boundary of a tank unit compartment 10b in which the tank 50 is contained is determined below the machining space 10a (Fig. 2). An opening 10c for collecting coolant is formed between the machining space 10a and the tank unit compartment 10b.

By moving the front cover 12 upward, the machining space 10a comes to be open to the outside of the housing 10. By pulling the bottom cover 13 forward, the tank unit compartment 10b comes to be open to the outside of the housing 10.

The regulator 14 is installed on the back surface of the housing 10. The regulator 14 has a tube 14A and is in communication with the housing 10. The regulator 14 has a function of receiving a supply of compressed air from, for example, an external compressor and adjusting the pressure. The compressed air subjected to the pressure adjustment is supplied to the machining unit 20 through the tube 14A and tubing which is not shown.

### [Movement mechanism]

As shown in Figs. 2 and 3, the movement mechanism 30 is placed above the machining space 10a. The movement mechanism 30 includes a pair of shafts 31A and 31B, a base unit 32 that supports the upper and lower ends of the shafts 31A and 31B, and a pair of shafts 33A and 33B that extend in the right-and-left direction. Hereinafter, the direction in which the pair of shafts 31A and 31B extend is defined as the z-direction.

The shafts 31A and 31B support a linkage unit 23 such that it can move in the z-direction. The linkage unit 23 is driven, in the z-direction, by a motor which is not shown. The shafts 33A and 33B support the base unit 32 such that it can move in the right-and-left direction. The base unit 32 is driven, in the right-and-left direction, by a motor which is not shown. With the structure described above, the movement mechanism 30 supports the machining unit 20 and allows the machining unit 20 to move in the z-direction and the right-and-left direction.

### [Holding unit]

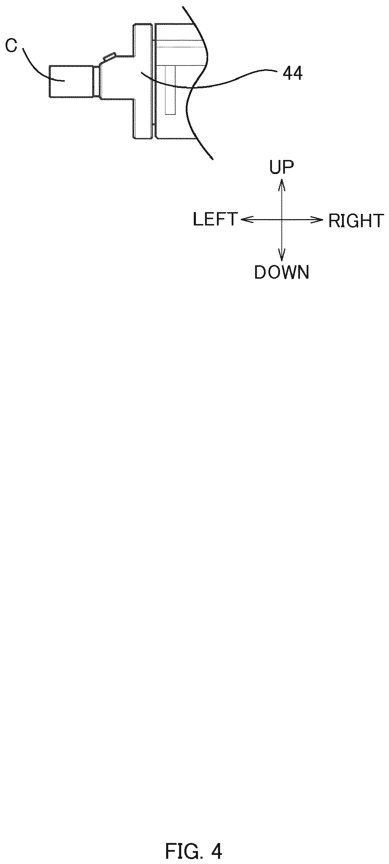

As shown in Figs. 2 and 4, the holding unit 40 includes a drive unit 41, a pair of shafts 43A and 43B that support the drive unit 41, and an attachment unit 44 that is supported by the drive unit 41.

The drive unit 41 is arranged to the right of the machining space 10a. The drive unit 41 has an output shaft extending in the right-and-left direction and can rotation-drive the attachment unit 44 about the output shaft. The attachment unit 44 is arranged inside the machining space 10a. The workpiece C can be attached to and removed from the left end of the attachment unit 44 (Fig. 4).

The shafts 43A and 43B are secured to the housing 10 at their two ends and extend in the y-direction that is perpendicular to the z-direction (Fig. 2). The shafts 43A and 43B support the drive unit 41 such that it can move in the y-direction. In this way, the drive unit 41 and the attachment unit 44 are movable in the y-direction.

### [Tank]

The tank 50 can be mounted in and removed from the housing 10. The tank 50 stores coolant for machining work. As shown in Fig. 3, in the mounted state, the tank 50 is contained in the tank unit compartment 10b. The tank 50 has an intake 57 that projects backward. The intake 57 is formed to have a substantially hollow-cylindrical shape, and is in communication with the inside of the tank 50. The intake 57 is, in the mounted state, connected to the feed unit 60 arranged at the back of the housing 10 (see Fig. 3) and can deliver the coolant stored in the tank 50 to the feed unit 60. Furthermore, as shown in Fig. 3, the filter 70 is disposed in the tank 50. The filter 70 has a filter material formed to have a hollow-cylindrical shape and can remove foreign matter contained in the coolant.

### [Feed unit]

The feed unit 60 includes a connection unit 61 and a pump unit 62, as shown in Fig. 3. The connection unit 61 is disposed in the tank unit compartment 10b and is connected to the intake 57 when the tank 50 is mounted. A channel that is in communication with the pump unit 62 is formed inside the connection unit 61.

The pump unit 62 is disposed behind the tank unit compartment 10b. The pump unit 62 has a function of taking the coolant from the connection unit 61 and discharging and delivering the coolant to the machining unit 20 through a channel which is not shown.

### [Machining unit]

As shown in Figs. 2 to 6, the machining unit 20 includes a motor 21, a spindle 22 that extends in the z-direction, the linkage unit 23, a milling bar 24 which is a tool at the tip to cut the workpiece C, and a jacket 25. The linkage unit 23 is a member that links the motor 21 and the movement mechanism 30 (Fig. 3). The rear part of the linkage unit 23 is supported by the movement mechanism 30.

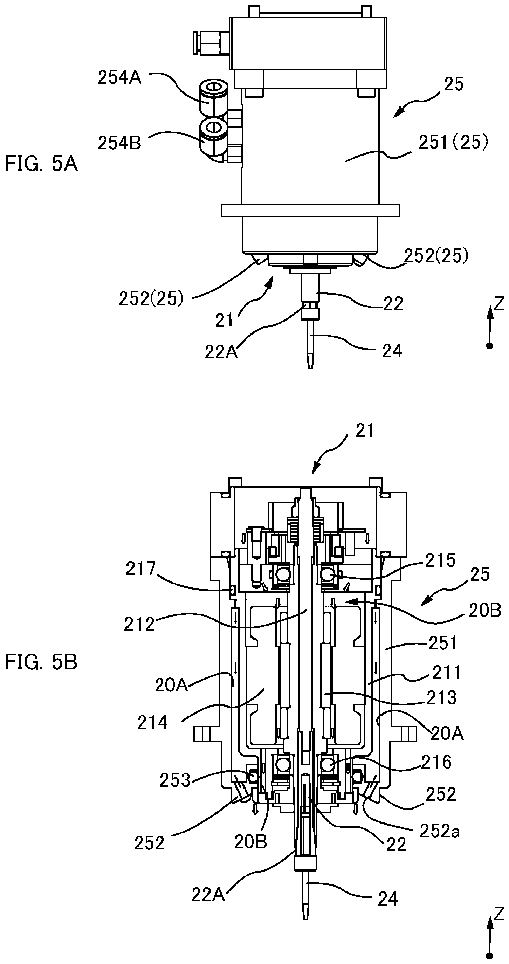

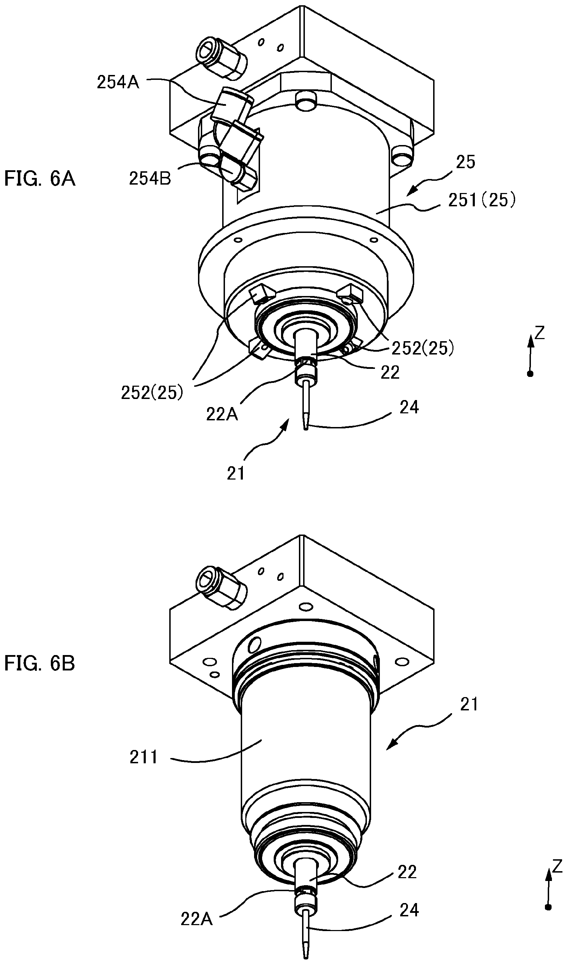

The motor 21 is a brushless motor and includes a casing 211, an output shaft 212, a rotor 213, and a stator 214 (Figs. 5 and 6). The motor 21 has a function of rotation-driving the spindle 22. The motor 21 is electrically connected to a control unit which is not shown and is controlled. The casing 211 is an example of the first housing in the present invention.

As shown in Figs. 5 and 6, the casing 211 is a member having a substantially hollow-cylindrical shape that extends in the z-direction and serves as the outer shell of the motor 21. Bearings 215 and 216 are disposed at an upper and lower parts of the casing 211, respectively. A circular ring-shaped packing 217 is attached to the upper circumferential surface of the casing 211. The packing 217 is made of an elastic body such as elastomer.

The casing 211 is, at its upper part, in communication with the regulator 14 through tubing and other components which are not shown and can receive a supply of compressed air. That is, the casing 211 forms an airway 20B as depicted by the white arrows in Fig. 5B through which the compressed air is flown toward the milling bar 24 along the z-axis.

The output shaft 212 is arranged in the casing 211 such that it extends in the z-direction. The upper and lower ends of the output shaft 212 are rotatably supported by the bearings 215 and 216, respectively. A permanent magnet is secured to the output shaft 212 such that it surrounds the output shaft 212 at its central part in the z-direction and forms the rotor 213 having a solid-cylindrical shape. The lower end of the output shaft 212 is coupled to the spindle 22.

The stator 214 includes stator cores and windings around each stator core. The stator 214 is disposed such that it surrounds the rotor 213 in the peripheral direction and is secured to the inner peripheral surface of the casing 211. The stator 214 is electrically connected to a control unit which is not shown and can rotation-drive the rotor 213 when supplied with electric power.

The spindle 22 is a member having a substantially solid cylindrical shape and is exposed to the machining space 10a (Fig. 3). A collet 22A is disposed at the lower end of the spindle 22 and holds the milling bar 24 for cutting in a removable manner.

The jacket 25 has a main body unit 251 and water supply units 254A and 254B (Figs. 5 and 6). The main body unit 251 is a member having a substantially hollow-cylindrical shape with an axis extending in the z-direction. The jacket 25 is an example of the second housing in the present invention.

The main body unit 251 is made of stainless steel and is secured such that it covers the casing 211 (Fig. 6). The main body unit 251 may be made of a resin. The main body unit 251 has, at least at a part thereof, an inner diameter that is larger than the outer diameter of the casing 211 and is disposed and secured coaxially from below the casing 211 like a cover. As shown in Fig. 5B, a channel 20A is formed between the main body unit 251 and the casing 211 through which coolant flows from the upper end to the lower end. The channel 20A is formed to have a substantially circular ring shape when seen in the z-direction. The channel 20A is located near the bearing 216 and the stator 214. Specifically, as shown in Fig. 5B, the channel 20A is located radially outward of the bearing 216 and the stator 214.

As shown in Fig. 5B, the upper end of the main body unit 251 is in contact with the outer periphery of the casing 211. The inner periphery of the upper end of the main body unit 251 is in contact with a packing 217 all around it. The lower end of the main body unit 251 has a packing 253. The packing 253 is made of an elastic body such as elastomer that is formed to have a circular ring shape. It is in contact with the lower end of the casing 211 all around it. The contacted portions of the casing 211 and the main body unit 251 is water-tight by the packings 217 and 253. In other words, the main body unit 251 is water-tightly in contact with the casing 211 at its upper and lower parts.

Four coolant nozzles 252 that are integrally formed with the main body unit 251 are disposed on the lower surface of the main body unit 251 (Fig. 6A). The coolant nozzles 252 are arranged at an angle of 90 degrees to each other in the circumferential direction around the spindle 22. An opening 252a is formed in each coolant nozzle 252 to connect the channel 20A and the outside of the jacket 25. The coolant nozzles 252 have a function of shooting coolant toward the workpiece C or the milling bar 24 through the openings 252a.

The water supply units 254A and 254B are disposed on the upper part of the main body unit 251. The water supply units 254A and 254B are formed as hollow tubes and are in communication with the channel 20A. The water supply units 254A and 254B are in communication with the feed unit 60 through a channel which is not shown and can receive a supply of the coolant.

### [Operation of the machining device]

Now, machining work with the machining device 1 and operations are described. Before starting machining work, a user puts a coolant into the tank 50 to which the filter 70 is attached and installs it to the tank unit compartment 10b. Upon installation, the intake 57 and the connection unit 61 are connected and the mounting of the tank 50 to the housing 10 is completed.

When the workpiece C is attached to the attachment unit 44 and the machining work is started, the spindle 22 and the milling bar 24 rotate and machine the workpiece C. With the movement mechanism 30, the attachment unit 44, and the drive unit 41, the milling bar 24 and the workpiece C can move relative to each other in three-dimensional directions. Therefore, the machining device 1 can three-dimensionally cut or machine the workpiece C.

During the machining work, the coolant stored in the tank 50 is filtered through the filter 70, passes the intake 57 and then the connection unit 61, and is supplied to the pump unit 62.

The coolant is supplied to the machining unit 20 by the pump unit 62. Specifically, the coolant flows from the water supply units 254A and 254B through the channel 20A in the substantially z-direction as depicted by the solid arrows in Fig. 5B and is shot through the coolant nozzles 252.

In flowing the channel 20A, the coolant cools the motor 21. Since the channel 20A is on the casing 211, the coolant comes in contact with the casing 211 and the heat generated in the motor 21 is conducted to the coolant through the casing 211. In this way, the heat generated in the motor 21 is removed. The heat in the motor 21 is mainly generated at the bearing 216 and the stator 214 having windings, and the channel 20A is located near the bearing 216 and the stator 214. Specifically, as shown in Fig. 5B, the channel 20A is located radially outward of the bearing 216 and the stator 214. Therefore, the coolant can efficiently remove the heat generated at the bearing 216 and the stator 214.

The coolant nozzles 252 shoot the coolant toward the machined portion to cool the workpiece C and the milling bar 24. By cooling the workpiece C and the milling bar 24 using the coolant, damages and burnout of the machined portion and degradation of the milling bar 24 are prevented. The coolant after having finished cooling is recovered into the opening 10c and then stored in the tank 50 again.

At the same time, the compressed air passes through the airway 20B in the casing 211 and is discharged toward the milling bar 24 from near the spindle 22 and the collet 22A, as depicted by the white arrows in Fig. 5B. The compressed air cools the parts of the motor 21 when it passes inside the casing 211, flowing radially outward of the bearing 215, between the stator 214 and the rotor 213, and radially outward of the bearing 216. In addition, entry of coolant or foreign matter such as cutting dusts into the motor 21 can be prevented by discharging the compressed air from near the spindle 22.

### <Effects>

As described above, the machining device 1 according to this embodiment includes the motor 21 having the casing 211 to which the milling bar 24 that machines the workpiece C can be attached and from which the milling bar 24 can be removed. The channel 20A for the coolant used to cool the milling bar 24 is arranged on at least a part of the casing 211.

With the above-mentioned structure, the motor 21 can be cooled using the coolant. Accordingly, compared to the cases where the heat of motors is naturally dissipated or motors are cooled with air, the motor 21 can be efficiently cooled. In addition, since the coolant for machining work that is used to cool the milling bar 24 and the workpiece C is also used to cool the motor 21, it is unnecessary to prepare dedicated cooling water for the motor 21 and/or prepare a cooling water circulation device. That is, the cost of manufacturing the machining device 1 can be reduced, and a smaller machining device 1 can be obtained.

The machining device 1 according to this embodiment includes the coolant nozzles 252 which are in communication with the channel 20A and shoot the coolant toward the milling bar 24.

With the above-mentioned structure, since the coolant is shot toward the milling bar 24 after cooling the motor 21, all the motor 21, the milling bar 24, and the workpiece C can be cooled.

The machining device 1 according to this embodiment includes the jacket 25 disposed to cover at least a part of the casing 211. The channel 20A is formed between the casing 211 and the jacket 25.

With the above-mentioned structure, the channel 20A can be constituted using a simple structure. Accordingly, the cost of manufacturing the machining device 1 can be reduced, and a smaller machining device 1 can be obtained.

The jacket 25 in this embodiment has the coolant nozzles 252. The coolant nozzles 252 are in communication with the channel 20A and shoot the coolant toward the milling bar 24.

Since the jacket 25 has the coolant nozzles 252, a mechanism of cooling the motor 21, the milling bar 24, and the workpiece C can be constituted using a simple structure.

In this embodiment, the motor 21 has the output shaft 212 that rotation-drives the milling bar 24, and the bearing 216 that rotatably supports the output shaft 212. The channel 20A is disposed radially outward of the bearing 216.

With the above-mentioned structure, since the channel 20A is formed near the bearing 216, the bearing 216, which is a part that generates heat in the motor 21, can be efficiently cooled.

The basing 211 in this embodiment constitutes the airway 20B through which the compressed air supplied from the regulator 14 can flow inside toward the milling bar 24.

With the above-mentioned structure, by using air-cooling in combination with water-cooling using the coolant, the motor 21 can be efficiently cooled.

### <Modified version>

In this embodiment, the machining device 1 includes four coolant nozzles 252, but the present invention is not limited thereto. The number of the coolant nozzles 252 may be one, two, or more; any number of coolant nozzles can be used.

In this embodiment, the channel 20A is constituted to have a circular ring shape when seen in the z-direction and is constituted such that the coolant flows in a substantially z-direction, but the present invention is not limited thereto. For example, the distance and the direction of flowing the coolant can be freely determined, such as forming the channel in a spiral around the motor 21. In addition, instead of using the jacket 25, a tube or the like may be installed around the motor 21 as the channel for the coolant.

## Claims

1. A machining device comprising:
a motor to which a tip tool can be attached and from which the tip tool can be removed, the tip tool machining a workpiece, the motor having a first housing, and
a channel for coolant used to cool the tip tool, wherein
the channel is arranged on at least a part of the first housing.

2. The machining device according to Claim 1, further comprising a nozzle in communication with the channel, the nozzle shooting the coolant toward the tip tool.

3. The machining device according to Claim 1 or 2, further comprising a second housing disposed to cover at least a part of the first housing,
the channel being formed between the first housing and the second housing.

4. The machining device according to Claim 3, wherein
the second housing comprises a nozzle in communication with the channel, the nozzle shooting the coolant toward the tip tool.

5. The machining device according to any one of Claims 1 to 4, wherein
the motor has an output shaft rotation-driving the tip tool, and a bearing rotatably supporting the output shaft,
the channel being disposed radially outward of the bearing.

6. The machining device according to any one of Claims 1 to 5, wherein
the first housing constitutes an airway through which a compressed air supplied from a regulator can flow inside the first housing toward the tip tool.
